# EUROPEAN PATENT APPLICATION

(11) **EP 1 583 335 A1**
(43) Date of publication of application: **05.10.2005**
(21) Application number: 04101371.5
(22) Date of filing: 02.04.2004
(51) Int. Cl.: H04M 1/725, G10H 1/00, A63F 13/10

(54) **Rhythm detection in radio communication terminals**

(71) Applicant: Sony Ericsson Mobile Communications AB, 221 88 Lund (SE)
(72) Inventor: GUSTAVSSON, Stefan SONY ERICSSON MOBILE COMMUNIC., 254 43, Helsingborg (SE); STENMARK, Fredrik SONY ERICSSON MOBILE COMMUNIC., 211 52, Malmö (SE)
(74) Representative: Lindberg, Olle Nils Olof

(57) **Abstract**

Radio communication terminal (10), comprising a user interface including a loudspeaker (12), a data memory (21) for storing music data files, and a computer processor system (20) comprising means for accessing said memory and generating a music signal, represented by accessed music data files, through said loudspeaker. The terminal comprises a rhythm detector (11;12;22), typically a dynamic transducer, devised to detect an external rhythmic signal, and means for generating a music data file, dependent on a detected rhythmic signal, representing a music signal with a rhythm corresponding to the rhythm of the detected signal. The external signal may e.g. be provided by beating or tapping the terminal, or by snapping fingers.

## Description

### Field of the invention

The present invention relates generally to means and methods for generating and composing music in a mobile radio communication terminal, and in particular to generation and control of a beat or rhythm.

### Background

The cellular telephone industry has had an enormous development in the world in the past decades. From the initial analog systems, such as those defined by the standards AMPS (Advanced Mobile Phone System) and NMT (Nordic Mobile Telephone), the development has during recent years been almost exclusively focused on standards for digital solutions for cellular radio network systems, such as D-AMPS (e.g., as specified in EIA/TIA-IS-54-B and IS-136) and GSM (Global System for Mobile Communications). Currently, the cellular technology is entering the so called 3^{rd} generation, providing several advantages over the former, 2^{nd} generation, digital systems referred to above.

Many of the advances made in mobile phone technology are related to functional features, such as better displays, more efficient and longer lasting batteries, built-in cameras, and so on. Polyphonic ring signals were introduced as a functional feature a few years ago, and the built-in loudspeakers of today are basically capable of reproducing any type of sound. This has generated a multitude of new services and functions, such as mobile disk jockeys and other audio software which are designed into mobile phones, e.g. for playing, sampling, or composing music. One well-known standard protocol for the interchange of musical information between musical instruments, synthesizers and computers, is called MIDI (Musical Instrument Digital Interface). MIDI defines the codes for a musical or melody event, which includes the start of a note, its pitch, length, volume and musical attributes, such as vibrato. It also defines codes for various button, dial and pedal adjustments used on synthesizers. MIDI files have the benefit that they take up much less memory space than sound files that contain the actual digitised music. Another related standard is SMAF (Yamaha's Synthetic music Mobile Application Format), which defines a mobile audio format which can contain MIDI, wave phrase and graphics data, and which furthermore may make use of vibrator signals. Transmission of segments from and to mobile phones may be achieved using MMS (Multimedia Message Service). MMS is an enhanced short message service for mobile phones that enables graphics, video clips and sound files, such as MIDI files, to be transmitted.

However, the means available today for interacting with the terminal when composing or sampling music are fairly rough. Basically, all control input to the terminal is effected by means of a keypad or the like, which by necessity is fairly small and limited in a mobile phone. For personal computers (PC), there are certain solutions on the market today which make it possible to play along with MIDI-songs. One such solution includes a special type of plectrum, probably including an accelerometer, which is communicatively connected to the PC. When the PC software plays a certain song, it signals the user when to strike the plectrum against a guitar in order to play the song. This system clearly has benefits, but requires a special device in the form of the plectrum in order for a user to be able to interact with the software. Furthermore, it is not usable for mobile phones.

### Summary of the invention

A general object of the invention is to provide improved means for managing and composing music on radio communication terminals, such as mobile phones. In particular, an object of the invention is to provide means for simple interaction with software for composing music in the terminal.

According to a first aspect, this object is fulfilled by a radio communication terminal, comprising a user interface including a loudspeaker, a data memory for storing music data files, and a computer processor system comprising means for accessing said memory and generating a music signal, represented by accessed music data files, through said loudspeaker. The terminal is further characterised by a rhythm detector devised to detect an external rhythmic signal, and means for generating a music data file, dependent on a detected rhythmic signal, representing a music signal with a rhythm corresponding to the rhythm of the detected signal.

Preferably, said rhythm detector comprises a movable element, which element is devised to be set in motion by an induced signal, and means for transforming motion of said element into an electric signal.

In one embodiment, said movable element comprises a membrane.

In a specific version of said embodiment, said membrane forms part of said loudspeaker.

In another specific version of said embodiment, said membrane forms part of a microphone included in said user interface.

In another embodiment, said movable element forms part of a linear vibrator.

In one embodiment, said rhythm detector comprises a keypad with keys devised to pick up a rhythm beat upon depression.

In another embodiment, said rhythm detector comprises a touch-sensitive display on which at least a portion is devised to pick up a rhythm beat upon depression.

Preferably, the terminal comprises means for selectively assigning an instrumental sound to said music data file, dependent on a user input selection.

Advantageously, said music data file is a MIDI format file.

According to a second aspect, the object of the present invention is fulfilled by a radio communication terminal, comprising a user interface, a data memory for storing computer program code for a computer game, and a computer processor system comprising means for accessing said memory and running said computer game on said terminal, and further comprising a rhythm detector devised to detect an external rhythmic signal, wherein said computer processor system is devised to use a rhythm of a detected signal as an input for controlling said computer game.

In one embodiment, said rhythm detector comprises a movable element, which element is devised to be set in motion by an induced signal, and means for transforming motion of said element into an electric signal.

In one embodiment, said computer program code comprises means for outputting a reference rhythm, and means for comparing a detected external rhythm with said reference rhythm.

In one embodiment, said means for outputting a reference rhythm are devised to output a predetermined rhythm by means of an audible signal through a loudspeaker.

In one embodiment, said means for outputting a reference rhythm are devised to output a predetermined rhythm by means of a visual signal through a display.

In one embodiment, said computer program code comprises means for controlling movement of an object of said computer game on a display of said terminal, by means of a detected external rhythm.

According to a third aspect, the object of the present invention is fulfilled by a method for generating music signals in a radio communication terminal, comprising the steps of:
- providing an external rhythmic signal to the terminal;
- detecting the external rhythmic signal by means of a rhythm detector in the terminal; and
- generating a music data file, dependent on the detected rhythmic signal, representing a music signal with a rhythm corresponding to the rhythm of the detected signal, by means of a computer processor system in the terminal.

Preferably, the step of detecting the external rhythmic signal comprises the steps of:
- said external rhythmic signal setting a movable element in said rhythm detector in motion; and
- transforming said motion of said element into an electric signal.

In one embodiment, said rhythm detector comprises a loudspeaker of said radio communication terminal, and wherein a membrane of said loudspeaker is set in motion by the external rhythmic signal.

In another embodiment, said rhythm detector comprises a microphone of said radio communication terminal, and wherein a membrane of said microphone is set in motion by the external rhythmic signal.

In yet another embodiment, said rhythm detector comprises a linear vibrator of said radio communication terminal, and wherein a movable element of said linear vibrator is set in motion by the external rhythmic signal.

In one embodiment, said external rhythmic signal is an acoustic signal.

In another embodiment, said external rhythmic signal is provided by a mechanical signal.

In one embodiment, the step of providing an external rhythmic signal to the terminal comprises the steps of:
- depressing a key of a keypad on the terminal.

In another embodiment, the step of providing an external rhythmic signal to the terminal comprises the steps of:
- depressing at least a portion of a touch-sensitive display on the terminal.

In another embodiment, said external rhythmic signal is provided by means of tapping the terminal.

In another embodiment, said external rhythmic signal is provided by means of shaking the terminal.

Advantageously, the method comprises the step of assigning an instrumental sound to said music data file dependent on a user input selection.

Preferably, the method comprises the step of storing said music data file in a MIDI format.

In one embodiment, the method comprises the step of displaying the rhythm of the detected signal on a display by means of a graphical user interface.

In one embodiment, the method comprises the step of displaying a predetermined rhythm on a display by means of a graphical user interface, as a target rhythm for user to follow in said step of providing an external rhythmic signal to the terminal.

According to a fourth aspect, the objects of the present invention are fulfilled by a method for controlling a computer game run on a radio communication terminal, comprising the steps of:
- providing an external rhythmic signal to the terminal;
- detecting the external rhythmic signal by means of a rhythm detector in the terminal; and
- using a rhythm of the detected signal as an input for controlling said computer game.

In one embodiment, the step of detecting the external rhythmic signal comprises the steps of:
- said external rhythmic signal setting a movable element in said rhythm detector in motion; and
- transforming said motion of said element into an electric signal.

In one embodiment, the method further comprises the steps of:
- outputting a reference rhythm; and
- comparing the detected external rhythm with said reference rhythm.

In one embodiment, the method further comprises the steps of:
- outputting said reference rhythm by means of an audible signal through a loudspeaker.

In one embodiment, the method further comprises the steps of:
- outputting said reference rhythm by means of a visual signal through a display.

In one embodiment, the method further comprises the steps of:
- controlling movement of an object of said computer game on a display of said terminal, by means of the detected external rhythm.

According to a fifth aspect, the objects of the present invention are fulfilled by a computer program product, for generating music signals in a radio communication terminal, comprising computer program code devised to control a computer processor system of said terminal to execute the steps of:
- detecting a sequence of transients from a rhythm detector in the terminal, induced by an external rhythmic signal provided to the terminal
- generating a music data file, dependent on the detected rhythmic signal, representing a music signal with a rhythm corresponding to the rhythm of the detected signal.

Preferably, the computer program product comprises computer program code devised to control the computer processor system of said terminal to execute the step of assigning an instrumental sound to said music data file, dependent on a user input selection.

Advantageously, the computer program product comprises computer program code devised to control the computer processor system of said terminal to execute the step of storing said music data file in a MIDI format in a memory in said terminal.

### Brief description of the drawing

The features and advantages of the present invention will be more apparent from the following description of the preferred embodiments with reference to the accompanying drawing, on which
Fig. 1 schematically illustrates an embodiment of a radio communication terminal on which the present invention may be used; and
Fig. 2 schematically illustrates the terminal of Fig. 1 in a block diagram of functional elements which are relevant to different embodiments of the present invention.

### Detailed description of preferred embodiments

The present description relates to the field of radio communication terminals. The term radio communication terminal, or terminal in short, includes all mobile equipment devised for radio communication with a radio station, which radio station also may be mobile terminal or e.g. a stationary base station. Consequently, the term radio terminal includes mobile telephones, pagers, communicators, electronic organisers, smartphones, PDA:s (Personal Digital Assistants) and DECT terminals (Digital Enhanced Cordless Telephony). Furthermore, it should be emphasised that the term comprising or comprises, when used in this description and in the appended claims to indicate included features, elements or steps, is in no way to be interpreted as excluding the presence of other features elements or steps than those expressly stated.

Exemplary embodiments will now be described with references made to the accompanying drawing.

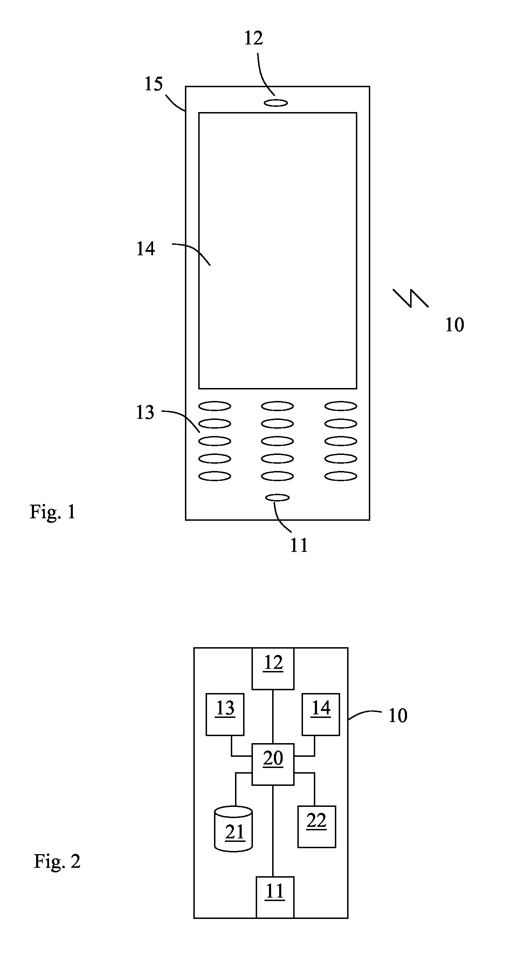

Fig. 1 illustrates a radio communication terminal in the embodiment of a cellular mobile phone 10. Terminal 10 comprises a chassis or housing 15, carrying a user audio input in the form of a microphone 11 and a user audio output in the form of a loudspeaker 12. A set of keys, buttons or the like constitutes a data input interface 13 is usable e.g. for dialling, according to the established art. A data output interface comprising a display 14 is further included, devised to display communication information, address list etc in a manner well known to the skilled person. Radio communication terminal 10 further includes an antenna and radio transmission and reception electronics (not shown).

Fig. 2 illustrates functional components of terminal 10. For the sake of simplicity, three different embodiments will be described below, all with reference to Fig. 2. A computer processor system includes a microprocessor 20. The computer processor system further includes software for accessing a data memory 21 in which sound and music data is stored. In a preferred embodiment, music data is stored in the MIDI format. However, it should be noted that also e.g. SMAF format files could be employed, and where reference is made to MIDI below it should be understood as an example for which SMAF is an alternative. Microprocessor 20 is devised to access memory 21 and retrieve stored music data files, and to generate music signals represented by said music data files. The computer processor system is also connected to loudspeaker 12, to which loudspeaker said music signals are relayed as electrical signals and transformed into sound. By means of input interface 13 and output interface 14, MIDI files may be compiled and processed into different pieces of composed music, e.g. for use as ring signals.

The present invention provides the possibility for a user to induce a rhythmic signal into a terminal with simple means, and means for using said signal for generating or composing music on the terminal. For this purpose, the terminal comprises a rhythm detector or sensor. Preferably, said rhythm detector includes an electro-dynamic transducer, in which a mechanical movement induced by the provided signal is transformed into an electric signal, in a manner well known in the state of the art. Furthermore, a special software is included in the computer processor system of terminal 10, devised to trig on transients in the electro-dynamic transducer caused by an external signal. This software is further devised to register the relative timing of said transients as a detected rhythm. Preferably, the terminal may be selectably set to a rhythm detection mode, in which mode transients exceeding a preset voltage level are determined to be a part of the beat of the detected signal.

In accordance with a first embodiment, said transducer is a microphone 11. A microphone is, as such, developed and used for receiving acoustic signals, which induce a vibration in a membrane. The movement of the membrane is then transformed into an electric signal, which may be processed and encoded, e.g. for transmission to a recipient. This basic technique forms part of the state of the art, and is not discussed further here. External acoustic signals may e.g. be induced by clapping hands or snapping fingers in front of microphone 11, or by beating a desktop surface. In accordance with this embodiment of the invention, microphone 11 is connected to microprocessor 20. When an acoustic signal is picked up by microphone 11, the rhythm detection software is devised to trig on a sequence of transients in the microphone, caused by the induced sound. The software is further devised to log the transients into a time representation in memory 21. In one embodiment, the time representation is stored as a MIDI file, which then represents a certain beat or rhythm as detected by the transducer 11.

A second embodiment instead makes use of a loudspeaker 12 as an electro-dynamic transducer. Basically, a loudspeaker is a reversed microphone, in which electric signals are induced in a coil and transformed into an acoustic signal, i.e. sound, by means of a membrane glued to the membrane. However, incoming sound will also generate acoustic vibrations in the membrane, which in turn moves the coil. The coil is thereby forced to move in a permanent magnetic field causing detectable electric fluctuations, whereby the loudspeaker can be used as an input for acoustic signals. This second embodiment works in a corresponding manner as the first embodiment making use of loudspeaker 12. The preceding paragraph is therefore also applicable to this second embodiment, with microphone 11 exchanged by loudspeaker 12.

In a third embodiment, the rhythm detection is carried out by means of a linear vibrator 22, included in the terminal 10 as a device for alerting a user, e.g. of an incoming call. The use of vibrating devices in mobile phones is also a well known technique, and has predominantly been provided by means of an electrical engine rotating a shaft. A weight is fixed off-centred to the shaft, and rotation by means of the engine thereby results in a vibration due to the built-in imbalance. Recently, however, the use of linear vibrators has been proposed, in which a movable element is instead displaced back and forth in one dimension. As such, the linear vibrator is therefore a dynamic transducer which is quite similar to a microphone, and in particular to a loudspeaker. Since a linear vibrator has a movable element of some weight, in order to be capable of generating noticeable vibrations, the linear vibrator 22 is not particularly suitable for picking up audio signals. However, it is suitable for picking up vibrations in the terminal. Therefore, this embodiment is adapted to pick up signals induced by tapping or shaking the terminal 10 as such. When the terminal 10 is tapped or shaken with a certain rhythm, the movable element is set into motion. The motion or vibration of the movable element is then transformed into an electric signal in the form of a sequence of transients, on which the rhythm detection software controlled by microprocessor 20 is devised to trig. The software is further devised to log the transients into a time representation in memory 21, preferably as a MIDI file representing a certain beat or rhythm as detected by the transducer 22.

The amplitude of the transients are normally between 4 and 100 mVrms, depending on the type of transducer used.

In an alternative embodiment, the rhythm is induced by means of keypad 13, by striking the keys or buttons thereof. Typically, depression of a key induces a rhythm beat. The rhythm is then detected by software taking signals from keypad electronics as input. In yet another alternative embodiment, the rhythm is induced by means of tapping a touch-sensitive display 14, where each tap is translated as a rhythm beat. Preferably, graphical user interface software executed by means of controller 20 is devised to present a striking portion on display 14 in a rhythm detection mode of the terminal, and when said portion is depressed or tapped the rhythm of a tapping sequence is detected.

In one embodiment, graphical user interface software executed by means of controller 20 is devised to present an induced rhythm on display 14. The rhythm may be displayed by means of a blinking or oscillating graphical element, such as a dot or a rising bar. The rhythm may also be displayed in the form of a display item resembling a traditional metronome with a pendulum. In another embodiment, the induced and picked-up rhythm is illustrated by means of a time diagram, or even by means of a frequency diagram for a steady beat.

Furthermore, the graphical user interface software may be devised to present a predetermined rhythm on display 14 by means of a metronome function, as a target rhythm for the user to follow. In a particular embodiment, this metronome function is included or used in a computer program for a game which is playable on the terminal. Such a game includes the feature of a user being challenged to maintain a certain rhythm, as indicated by the metronome function, for a certain purpose. The game may simply be a musical training program. In another embodiment, the game involves the feature of keeping a certain running rhythm of an athlete in a sports game, such as a runner or a long-jumper, or a swing rhythm of a golfer. As the skilled person realises, there are numerous ways of making use of a displayed metronome function which a user is devised to follow by inducing a rhythm in the terminal, in a computer game played on the terminal. In accordance with the embodiments above, the rhythm may be induced by e.g. tapping the terminal body, keys of keypad 13, or a touch-sensitive display 14. Furthermore, a reference rhythm may be outputted from the terminal by means of e.g. an audible signal from loudspeaker 12, or a visual signal on display 14. A computer game may also be based on challenging a user to follow the reference signal. Means for comparing the reference rhythm with the detected rhythm of an input rhythmic signal are preferably employed in the computer program of the computer game, wherein an evaluation of a users performance may be based on the comparison between the reference rhythm and the detected rhythm. Points may e.g. be scored by the user dependent on how close to the reference rhythm the detected rhythm, induced by the user, is on a scale of e.g. rhythm period or frequency. In a computer game, the detected rhythm may also be used to control movement, or rhythm of movement, of an object visualised on the terminal display 14. Such an object may e.g. be a sports character, as exemplified above, where detected the rhythm determines speed or pace of the character.

In a preferred embodiment, the rhythm detection software comprises means for associating the sound of a certain instrument to the beats of the rhythm in the stored time representation. The instrumental sound is preferably also selectable, by using display 14 and keypad 13, or a touch-sensitive display. Examples of different selectable instruments include e.g. base drum, conga, cymbal, and so on. It is preferably also possible to exchange certain beats in a detected and stored rhythm, and change the associated instrumental sound only for said certain beats.

The present invention brings about a solution for increased user interaction with radio communication terminals, in the field of composing or generating music. A merit of the invention is also use of that increased interaction is accomplished without the need for sophisticated accessories. Furthermore, an advantageous technical effect provided by the invention is that the present invention can, at least in certain embodiments, be realised with the hardware present in today's mobile phones, with appropriate modification of the built-in software. A specific embodiment of the invention is therefore computer program code for use in the computer system of a radio communication terminal, for generating, composing and storing music data according to what has been described above.

The principles of the present invention have been described in the foregoing by examples of embodiments or modes of operations. However, the invention should not be construed as being limited to the particular embodiments discussed above, and it should be appreciated that variations may be made in those embodiments by persons skilled in the art, without departing from the scope of the present invention as defined by the appended claims.

## Claims

1. Radio communication terminal (10), comprising a user interface including a loudspeaker (12), a data memory (21) for storing music data files, and a computer processor system (20) comprising means for accessing said memory and generating a music signal, represented by accessed music data files, through said loudspeaker, **characterised by** a rhythm detector (11;12;13;14;22) devised to detect an external rhythmic signal, and means for generating a music data file, dependent on a detected rhythmic signal, representing a music signal with a rhythm corresponding to the rhythm of the detected signal.

2. The radio communication terminal as recited in claim 1, **characterised in that** said rhythm detector comprises a movable element, which element is devised to be set in motion by an induced signal, and means for transforming motion of said element into an electric signal.

3. The radio communication terminal as recited in claim 2, **characterised in that** said movable element comprises a membrane.

4. The radio communication terminal as recited in claim 3, **characterised in that** said membrane forms part of said loudspeaker (12).

5. The radio communication terminal as recited in claim 3, **characterised in that** said membrane forms part of a microphone (11) included in said user interface.

6. The radio communication terminal as recited in claim 2, **characterised in that** said movable element forms part of a linear vibrator (22).

7. The radio communication terminal as recited in claim 1, **characterised in that** said rhythm detector comprises a keypad (13) with keys devised to pick up a rhythm beat upon depression.

8. The radio communication terminal as recited in claim 1, **characterised in that** said rhythm detector comprises a touch-sensitive display (14) on which at least a portion is devised to pick up a rhythm beat upon depression.

9. The radio communication terminal as recited in any of the preceding claims, **characterised by** means for selectively assigning an instrumental sound to said music data file.

10. The radio communication terminal as recited in any of the preceding claims, **characterised in that** said music data file is a MIDI format file.

11. Radio communication terminal (10), comprising a user interface, a data memory (21) for storing computer program code for a computer game, and a computer processor system (20) comprising means for accessing said memory and running said computer game on said terminal, **characterised by** a rhythm detector (11;12;13;14;22) devised to detect an external rhythmic signal, wherein said computer processor system is devised to use a rhythm of a detected signal as an input for controlling said computer game.

12. The radio communication terminal as recited in claim 11, **characterised in that** said rhythm detector comprises a movable element, which element is devised to be set in motion by an induced signal, and means for transforming motion of said element into an electric signal.

13. The radio communication terminal as recited in claim 11 or 12, **characterised in that** said computer program code comprises means for outputting a reference rhythm, and means for comparing a detected external rhythm with said reference rhythm.

14. The radio communication terminal as recited in claim 13, **characterised in that** said means for outputting a reference rhythm are devised to output a predetermined rhythm by means of an audible signal through a loudspeaker (12).

15. The radio communication terminal as recited in claim 13, **characterised in that** said means for outputting a reference rhythm are devised to output a predetermined rhythm by means of a visual signal through a display (14).

16. The radio communication terminal as recited in claim 11 or 12, **characterised in that** said computer program code comprises means for controlling movement of an object of said computer game on a display (14) of said terminal, by means of a detected external rhythm.

17. The radio communication terminal as recited in any of the previous claims 11-16, further comprising any of the features of claims 3-8.

18. Method for generating music signals in a radio communication terminal (10), comprising the steps of:
- providing an external rhythmic signal to the terminal;
- detecting the external rhythmic signal by means of a rhythm detector (11;12;13;14;22) in the terminal; and
- generating a music data file, dependent on the detected rhythmic signal, representing a music signal with a rhythm corresponding to the rhythm of the detected signal, by means of a computer processor system (20) in the terminal.

19. The method as recited in claim 18, wherein the step of detecting the external rhythmic signal comprises the steps of:
- said external rhythmic signal setting a movable element in said rhythm detector in motion; and
- transforming said motion of said element into an electric signal.

20. The method as recited in claim 19, wherein said rhythm detector comprises a loudspeaker (12) of said radio communication terminal, and wherein a membrane of said loudspeaker is set in motion by the external rhythmic signal.

21. The method as recited in claim 19, wherein said rhythm detector comprises a microphone (11) of said radio communication terminal, and wherein a membrane of said microphone is set in motion by the external rhythmic signal.

22. The method as recited in claim 19, wherein said rhythm detector comprises a linear vibrator (22) of said radio communication terminal, and wherein a movable element of said linear vibrator is set in motion by the external rhythmic signal.

23. The method as recited in any of the preceding claims 18-22, wherein said external rhythmic signal is an acoustic signal.

24. The method as recited in any of the preceding claims 18-22, wherein said external rhythmic signal is provided by a mechanical signal.

25. The method as recited in claim 24, wherein the step of providing an external rhythmic signal to the terminal comprises the steps of:
- depressing a key of a keypad (13) on the terminal.

26. The method as recited in claim 24, wherein the step of providing an external rhythmic signal to the terminal comprises the steps of:
- depressing at least a portion of a touch-sensitive display (14) on the terminal.

27. The method as recited in claim 24, wherein said external rhythmic signal is provided by means of tapping the terminal.

28. The method as recited in claim 24, wherein said external rhythmic signal is provided by means of shaking the terminal.

29. The method as recited in any of the preceding claims 18-28, comprising the step of assigning an instrumental sound to said music data file dependent on a user input selection.

30. The method as recited in any of the preceding claims 18-29, comprising the step of storing said music data file in a MIDI format.

31. The method as recited in any of the preceding claims 18-30, comprising the step of displaying the rhythm of the detected signal on a display (14) by means of a graphical user interface.

32. The method as recited in any of the preceding claims 18-30, comprising the step of displaying a predetermined rhythm on a display (14) by means of a graphical user interface, as a target rhythm for user to follow in said step of providing an external rhythmic signal to the terminal.

33. Method for controlling a computer game run on a radio communication terminal (10), comprising the steps of:
- providing an external rhythmic signal to the terminal;
- detecting the external rhythmic signal by means of a rhythm detector (11;12;13;14;22) in the terminal; and
- using a rhythm of the detected signal as an input for controlling said computer game.

34. The method as recited in claim 33, wherein the step of detecting the external rhythmic signal comprises the steps of:
- said external rhythmic signal setting a movable element in said rhythm detector in motion; and
- transforming said motion of said element into an electric signal.

35. The method as recited in claim 33 or 34, further comprising the steps of:
- outputting a reference rhythm; and
- comparing the detected external rhythm with said reference rhythm.

36. The method as recited in claim 35, further comprising the step of:
- outputting said reference rhythm by means of an audible signal through a loudspeaker (12).

37. The method as recited in claim 35, further comprising the step of:
- outputting said reference rhythm by means of a visual signal through a display (14).

38. The method as recited in claim 33 or 34, further comprising the steps of:
- controlling movement of an object of said computer game on a display (14) of said terminal, by means of the detected external rhythm.

39. method as recited in any of the previous claims 33-38, further comprising any of the steps of claims 20-28.

40. Computer program product for use in a radio communication terminal (10) for generating music signals, comprising computer program code devised to control a computer processor system (20) of said terminal to execute the steps of:
- detecting a sequence of transients from a rhythm detector (11;12;22) in the terminal, induced by an external rhythmic signal provided to the terminal
- generating a music data file, dependent on the detected rhythmic signal, representing a music signal with a rhythm corresponding to the rhythm of the detected signal.

41. The computer program product as recited in claim 40, comprising computer program code devised to control the computer processor system of said terminal to execute the step of assigning an instrumental sound to said music data file, dependent on a user input selection.

42. The computer program product as recited in claim 40 or 41, comprising computer program code devised to control the computer processor system of said terminal to execute the step of storing said music data file in a MIDI format in a memory (21) in said terminal.
